# EUROPÄISCHE PATENTSCHRIFT

(11) **EP 4 413 276 B1**
(45) Veröffentlichungstag und Bekanntmachung des Hinweises auf die Patenterteilung: **17.09.2025**
(21) Anmeldenummer: 22773675.8
(22) Anmeldetag: 07.09.2022
(51) Int. Cl.: F16D 23/06

(54) **SCHALTBAUGRUPPE FÜR EIN GETRIEBE**
SHIFTING ASSEMBLY FOR A TRANSMISSION
ENSEMBLE DE CHANGEMENT DE VITESSE POUR UNE BOÎTE DE VITESSES

(30) Priorität: 05.10.2021 DE 102021125819
(43) Veröffentlichungstag der Anmeldung: 14.08.2024
(73) Patentinhaber: Voith Patent GmbH, 89522 Heidenheim (DE)
(72) Erfinder: FÄHNLE, Rainer, 73540 Heubach (DE); KLINGLER, Tobias, 89555 Steinheim (DE)
(74) Vertreter: Voith Patent GmbH - Patentabteilung
(86) Internationale Anmeldenummer: PCT/EP2022/074868
(87) Internationale Veröffentlichungsnummer: WO 2023/057160

(56) Entgegenhaltungen:
- EP-A1- 1 447 581
- DE-A1- 102014 118 914
- DE-A1- 102015 102 141

## Beschreibung

Die Erfindung betrifft eine Schaltbaugruppe für ein Getriebe zur Koppelung einer Antriebsbaugruppe mit einer Abtriebsbaugruppe. Eine derartige Schaltbaugruppe kann in einem Automatgetriebe für ein Kraftfahrzeug eingesetzt werden um beispielsweise von einem Gang in einen anderen Gang umzuschalten.

Gattungsgemäße Automatgetriebe sind allgemein bekannt. Beispielhaft soll hier auf die DE 20 21 543 A1 verwiesen werden, welche ein kombiniert hydrodynamisch - mechanisches Getriebe für Fahrzeuge mit Teilung der Traktionsleistung mittels eines Differentialgetriebes auf einen Kraftweg mit einem hydrodynamischen Wandler und einen parallel dazu liegenden mechanischen Kraftweg und mit einer Zusammenführung der Traktionsleistung auf einen gemeinsamen Kraftweg beschreibt. Dabei weist das mechanische Getriebe, wahlweise ein- und ausschaltbaren Übersetzungsstufen (Gänge) im hydrodynamischen und/oder mechanischen und/oder im gemeinsamen Kraftweg auf.

In der EP2 162 643 A1 wird ein Koppelschema für ein Automatgetriebe vorgeschlagen, das genau einen Planetensatz hinter dem Wandler aufweist, wobei zwischen der Antriebsseite bzw. dem einen Planetensatz und der Abtriebsseite bzw. der Abtriebswelle eine Klauenkupplung angeordnet ist, die auch als Schalteinheit bezeichnet werden kann, wobei die Schalteinheit ein Teil einer nicht näher offenbarten Schaltbaugruppe ist. Dieser Schaltbaugruppe werden auch die Synchronisationsmittel und die Betätigungsmittel der Klauenkupplung zugeordnet.

Die Schaltbaugruppe ist dient dazu, eine schaltbare drehfeste Verbindung zwischen der Antriebsseite und der Abtriebsseite herzustellen. In einem ersten Schritt des Schaltvorgangs sorgt die Synchronisierungsbaugruppe dafür, dass die Drehzahlen der zu schaltenden Verbindungsteile angeglichen werden. In einem zweiten Schritt wird dann eine drehfeste Verbindung zwischen der Getriebewelle und der Abtriebswelle über eine Kupplungsscheibe hergestellt. Der entsprechende Gang ist dann geschaltet.

Aus der DE 10 2016 207 262 A1 ist eine Schaltbaugruppe bekannt, aus der ein möglicher Aufbau einer solchen Schaltbaugruppe zu entnehmen ist. Der Transmitter wird hier als Kraftübertragungselement bezeichnet, das drehfest mit dem Abtrieb gekoppelt ist.

DE10 2015 102 141 A1 offenbart einen weiteren Aufbau einer Schaltbaugruppe mit einem Transmitter. Der Transmitter weist Aussparungen mit Sperrflächen auf. In diese Aussparungen greifen die Mitnehmer der beidseits des Transmitters angeordneten Synchronringe ein. Im Wesentlichen unterscheidet man drei Zustände während der Synchronisation bei der der Transmitter eine definierbare Position in Axialrichtung einnimmt. Das ist die Leerlaufposition, bei der der Transmitter mittig zwischen den beiden Synchronringen angeordnet ist, wobei keine Drehmomentübertragung erfolgt.

Eine zweite Position ist die Synchronisierposition, bei der der Transmitter mit einem der Synchronringe in Kontakt steht. Bei der Synchronisation erfolgt eine axiale Verschiebung des Transmitters wodurch in Umfangsrichtung ein verdrehen von Synchronring und Transmitter zueinander erfolgt. Diese Verdrehung wird dadurch begrenzt, dass die Mitnehmer an Sperrflächen anschlagen. Die Sperrflächen sind schräg ausgerichtete Flächen am Rand der Aussparungen im Transmitter.

Die dritte Position ist die Schaltposition, bei der der Transmitter über die Kupplungsscheibe formschlüssig mit der Antriebsseite gekoppelt ist. Dafür sind entsprechende Verzahnungen auf Antriebsseite und Transmitter vorgesehen die dann ineinandergreifen. Die Abtriebsseite ist hierbei formschlüssig mit einer Kupplungsscheibe gekoppelt.

Automatetriebe für Kraftfahrzeuge wie LKW oder Bus werden üblicherweise für wesentlich mehr Schaltzyklen ausgelegt als im PKW Bereich. Versuche haben gezeigt, dass die bekannten Auslegungen beim Schalten nicht die Verschleißanforderungen erfüllen. Insbesondere ist der Verschleiß an den Sperrflächen zu groß.

Die Aufgabe der Erfindung ist es, eine verbesserte Auslegung der Schaltbaugruppe vorzuschlagen.

Die Aufgabe wird erfindungsgemäß durch eine Ausführung entsprechend dem unabhängigen Anspruch 1 gelöst. Weitere vorteilhafte Ausführungsformen der vorliegenden Erfindung finden sich in den Unteransprüchen.

Es wird eine Schaltbaugruppe für ein Getriebe zur Koppelung einer Antriebswelle, die einer Antriebsbaugruppe zugeordnet ist, mit einer Abtriebswelle, die einer Abtriebsbaugruppe zugeordnet ist vorgeschlagen. Die Schaltbaugruppe umfasst zwei Synchronringe und einen dazwischen angeordneten Transmitter, wobei die Synchronringe unterschiedlich ausgeführte korrespondierende Mitnehmer aufweisen, die paarweise in Ausnehmungen des Transmitters eingreifen, wobei der Transmitter in mehrere Funktionsstellungen gegenüber den Synchronringen bewegbar ist.

Erfindungsgemäß ist vorgesehen, dass eine Funktionsstellungen eine Synchronposition ist, bei der korrespondierende erste Mitnehmer vorgesehen sind, die in erste Ausnehmung eingreifen, wobei die ersten Mitnehmer eine Anschlagfläche aufweisen die mit Sperrflächen am Transmitter in Kontakt bringbar sind, wobei die Anschlagflächen am ersten Mitnehmer und die Sperrflächen am Transmitter derart zueinander ausgerichtet sind, dass diese in einer Synchronposition parallel zueinander angeordnet sind.

Eine Synchronisierposition ist eine Funktionsstellung, bei ein Synchronringe in eine Position bewegt wurde, bei der die Reibfläche des Synchronrings mit einer Gegenreibfläche in Kontakt kommt, so dass ein Schleppmoment übertragen wird. Ausgehend von der Bewegung in Axialrichtung ist die erste Synchronisierposition die Position bei der die Reibflächen aufeinandertreffen und die letzte Synchronisierposition ist die Position bei der zwischen den Reibflächen kein Schlupf mehr auftritt.

In einer bevorzugten Ausführung sind die Anschlagflächen an den ersten Mittnehmern der Synchronringe und die Sperrflächen am Transmitter parallel zueinander angeordnet, sobald die Verdrehung ihren Maximalwert aufweist, so dass vorzugsweise zweite Mitnehmer mit einer Indexflächen an Stoppflächen am Transmitter anschlagen.

Vorzugsweise sind die Anschlagflächen an den ersten Mitnehmern derart angeordnet, dass diese in Umfangsrichtung gesehen an den Rändern der ersten Ausnehmungen schräg ausgerichtet gegenüberliegen angeordnet sind.

So können die Anschlagflächen einen Winkel β zwischen 50° und 65° gegenüber der Axialrichtung aufweisen.

Weiterhin kann eine zweite Ausnehmung am Transmitter vorgesehen sein, die durch Stoppflächen begrenzt ist die parallel zur Axialrichtung ausgerichtet sind und die mit Indexflächen an zweiten Mittnehmern in Kontakt bringbar sind. Dadurch wird die Verdrehung zwischen Transmitter und Synchronringen begrenzt.

Vorzugsweise können die Stoppflächen, die Indexflächen, die Anschlagflächen und/oder die Sperrflächen Nitriert sein, wobei vorzugsweise eine Nitrierschicht mit einer Dicke zwischen 5µm und 15µm vorgesehen ist.

Im Folgenden wird die Erfindung anhand von Figuren erläutert. Die Figuren zeigen im Einzelnen:
- Fig.1: Explosionszeichnung einer Schalbaugruppe
- Fig.2a -c: Schaltstellungen des Transmitters
- Fig. 3a: Kontaktfläche entsprechend dem StdT
- Fig. 3b: Kotaktfläche entsprechend der Erfindung

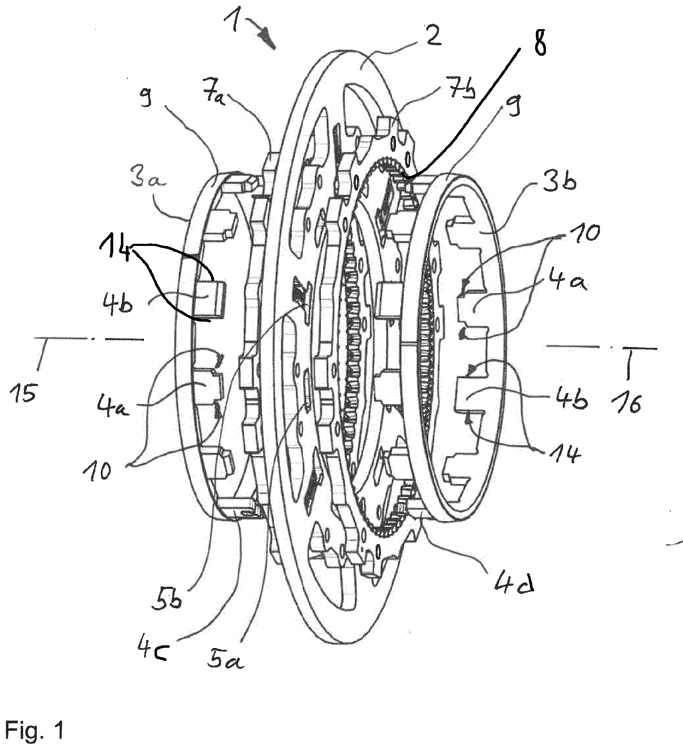

Figur 1 zeigt eine Explosionszeichnung einer Schaltbaugruppe 1 in der nur die für die Erfindung wesentlichen Teile dargestellt sind. Zwischen den beiden Synchronringen 3a und 3b ist der Transmitter 2 angeordnet. Die dargestellten Sperrringe 7a, und 7b sind im montierten Zustand mit dem Transmitter 2 drehfest gekoppelt z.B. verschraubt. Mittels dem Sperrring wird eine Formschlüssige Verbindung zum geschalteten Gang hergestellt wenn die Synchronisation erfolgt ist.

Die Schaltbaugruppe 1 kommt in einem Getriebe zu Einsatz um einer Antriebswelle 15, die einer Antriebsbaugruppe bzw. Antriebsseite zugeordnet ist, mit einer Abtriebswelle 16, die einer Abtriebsbaugruppe bzw. Abtriebsseite zugeordnet ist zu koppeln.

Wie aus dem StdT bekannt, kann der Transmitter 2 mittels einer nicht dargestellten Schiebevorrichtung axial verschoben werden. Eingangs wurden bereits die drei wesentlichen Funktionsstellungen oder Schiebebereiche erläutert, die der Transmitter 2 dabei einnimmt, die Leerlauf-, die Synchronisier- und die Schaltposition.

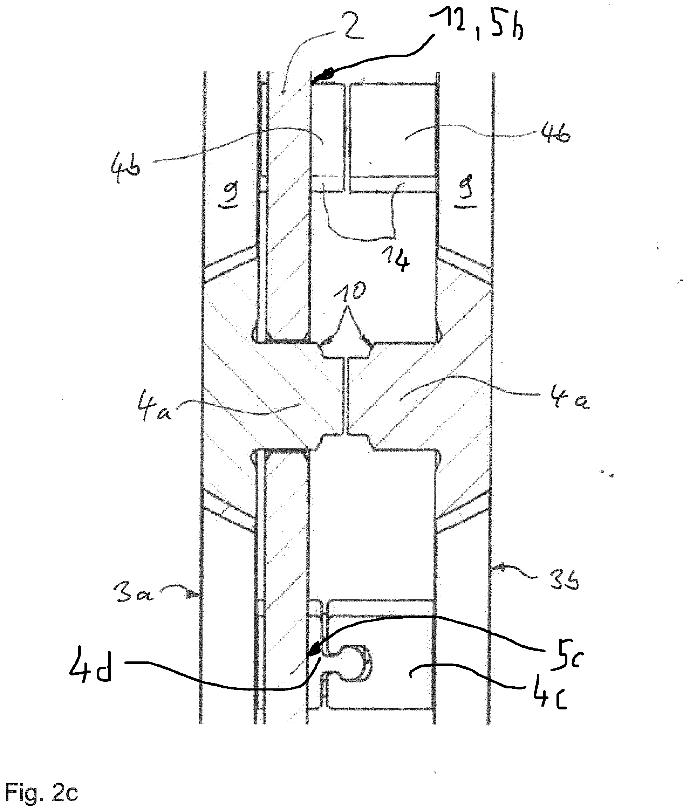

Die Synchronringe 3a, b weisen jeweils über den Umfang verteilt Mitnehmer 4a, b, c und d auf, die unterschiedlich ausgeführt sind. Die unterschiedlich Ausgeführten Mitnehmer 4a, b, c, d greifen in unterschiedlich dimensionierte Ausnehmungen 5a, b, c des Transmitters 2 ein. So gibt es Mitnehmer 4c, d mittels denen die Synchronringe 3a, b derart miteinander gekoppelt sind, dass die Synchronringe 3a, b zueinander beweglich bleiben. Diese Verbindung ist in Figur 2c gut zu erkennen.

Weiterhin gibt es zweite Mitnehmer 4b mit Stoppflächen 12, zur Begrenzung der relativen Verdrehung von Synchronringen 3a, b und Transmitter 2 zueinander, und erste Mitnehmer 4a die Anschlagflächen 10 aufweisen.

Die Ausnehmungen 5a, b sind an die unterschiedlichen Mitnehmer 4a, b, c, d angepasst, wobei die Anschlagflächen 10 der ersten Mitnehmer 4a in der Synchronposition des Transmitters 2 bzw. während der Synchronisation an den Sperrflächen 6 des Transmitters 2 anliegen bzw. mit diesen in Kontakt stehen. Die Anschlagfläche 10 und der Sperrfläche 6 sind winkelig, Winkel β, zur Axialbewegung ausgerichtet.

Sobald die Drehzahldifferenz klein genug ist kann eine Axialverschiebung stattfinden, bei der der Transmitters 2 sich relativ zu den Synchronringen 3a, b verdreht , so dass mit dem Transmitter 2 der jeweilige Sperrring 7a oder 7b in eine Position gedreht wird, die es ermöglicht, dass die Verzahnung des Sperrrings 7a oder b in die nicht dargestellte Gegenverzahnung verschoben werden kann. Hinsichtlich der allgemeinen Funktionsweise beim Synchronisieren unterscheidet sich die Schaltbaugruppe 1 nicht vom StdT.

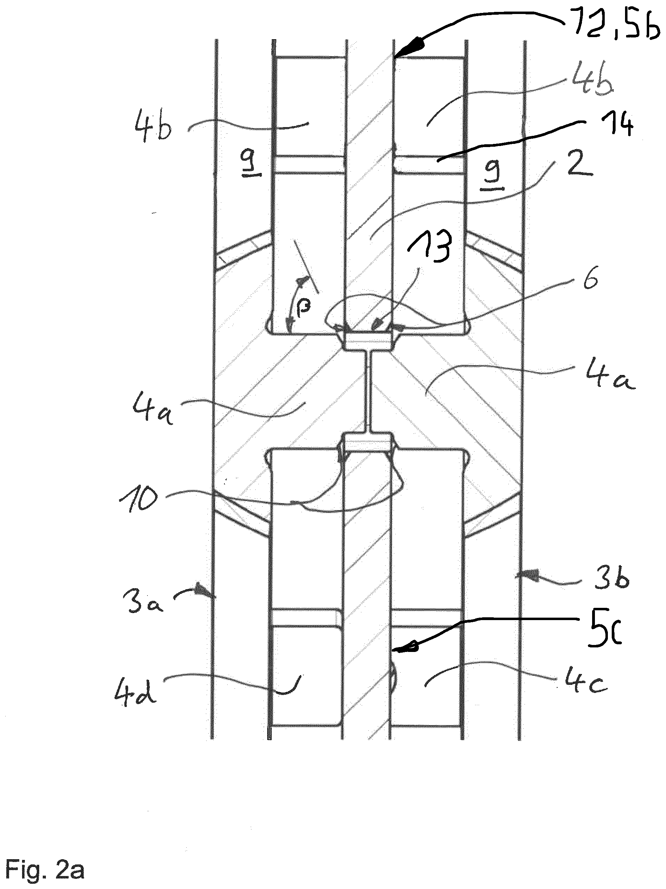

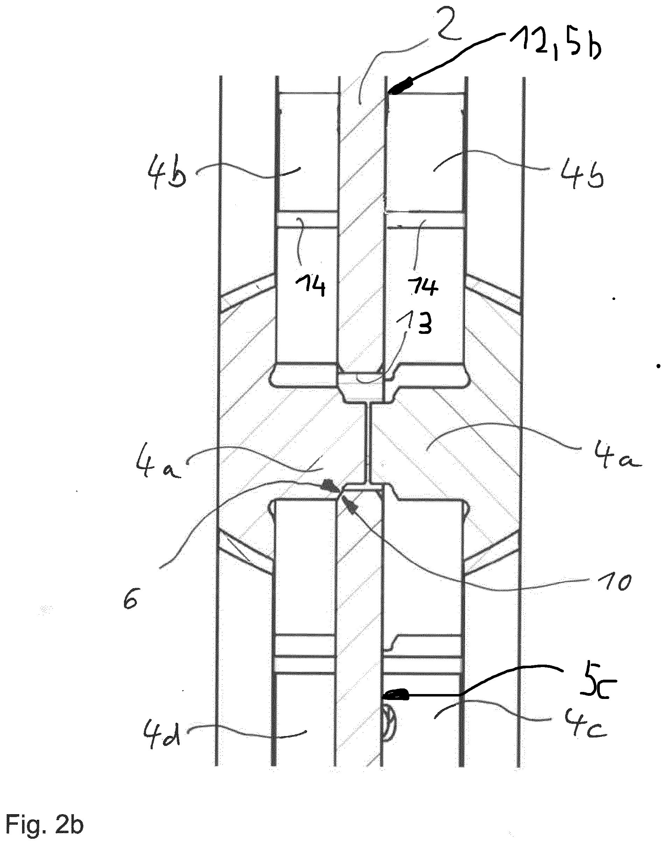

Figur 2 a zeigt den Transmitter 2 in der Leerlaufposition, also mittig zwischen den beiden Synchronringen 3a und 3b. Diese Position wird üblicherweise mittels eines Zentrierelementes fixiert, auf dessen Darstellung hier aber verzichtet wurde. In der Leerlaufposition kann kein Drehmoment von der Antriebswelle 15 auf die Abtriebswelle 16 übertragen werden.

Figur 2 b zeigt eine Synchronposition des Transmitters 2, bei der der Synchronring 3b aktiv ist, um die Drehzahl der Antriebsseite 15 mit der Drehzahl der Abtriebsseite 16 zu synchronisieren. Eine Drehzahldifferenz zwischen dem Synchronring 3b und der nicht dargestellten Gegen-Reibfläche führt dazu, das der Synchronring 3b in Umfangsrichtung mitgenommen wird. Durch die Axialbewegung beim Schalten des Transmitters 2 werden die am Umfang verteilten Anschlagflächen 10 an den ersten Mittnehmern der Synchronringe mit den Sperrflächen 6 am Transmitter 2 in Anlage gebracht. Aufgrund der schrägen Ausrichtung von Anschlagfläche 10 und Sperrfläche 6, wird bei vorliegender Differenzdrehzahl eine Kraftkomponente oder eine Sperrkraft erzeugt, die eine Verschiebung des Transmitters 2 relativ zum Mitnehmer 34 vorerst verhindert.

Die maximale Relativverdrehung wird durch die zweiten Mitnehmer 4b begrenzt, die in zweite Ausnehmungen 5b eingreifen. Die zweiten Ausnehmungen 5b am Transmitter 2 weisen Stoppflächen 12 auf, die die parallel zur Axialrichtung ausgerichtet sind und die mit Indexflächen 14 an den zweiten Mittnehmern 4b in Kontakt bringbar sind. Dadurch wird die Verdrehung zwischen Transmitter und Synchronringen begrenzt.

Je kleiner die vorliegende Drehzahldifferenz, umso mehr kann sich die Anschlagflächen 10 gegenüber den Sperrflächen 6 relativ bewegen, wobei das resultierende Reibmoment zwischen Synchronringreibfläche 9 und Gegen-Reibfläche erst im Laufe der Zeit zu einer Drehzahlanpassung zwischen den Reibflächen führt.

Ist die Drehzahldifferenz ausreichend klein, verändern sich auch die Sperrkräfte zwischen Anschlagflächen 10 und Sperrflächen 6, so dass ein weiteres verschieben des Transmitters 2 in axialer Richtung erfolgen kann, wodurch Transmitter 2 und Synchronringe sich gegeneinander relativ verdrehen.

Oder anders, sinkt die ausgeübte Sperrkraft wird der Transmitter 2 aufgrund der schrägen Ausrichtung von Anschlagfläche 10 und Sperrfläche 6, in Umfangsrichtung entgegengesetzt zur Drehrichtung der Antriebsseite verdreht und nimmt solang sich die Flächen 6, 10 berühren weitere Synchronposition ein.

Figur 2c stellt den durchgeschalten Transmitter 2 dar, bei der der Transmitter 2 axial so weit verschoben wird, dass die Sperrverzahnung 8 des Sperrrings 7b in eine nicht dargestellte Gangradverzahnung eingreift. Auf diese Weise ist eine drehfeste Verbindung zwischen der Antriebsbaugruppe und der Abtriebsbaugruppe hergestellt bzw. ein Gang geschaltet.

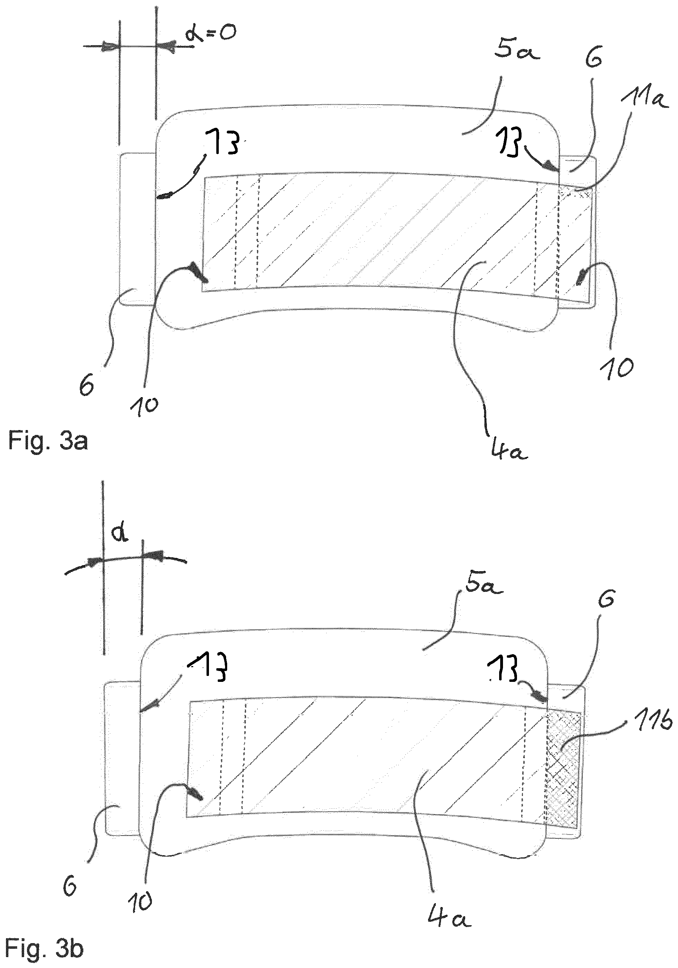

Figuren 3 zeigen schließlich den Unterschied zwischen dem StdT und der Erfindung. Die beiden Ausführungen unterscheiden sich dadurch, dass die Kontaktfläche 11a der Ausführung Figur 3a und die Kontaktfläche 11b der Ausführung Figur 3b unterschiedlich groß sind.

Die gekennzeichneten Kontaktflächen 11a und 11b sind jeweils die Fläche, über die Kräfte von Synchronring 3a oder 3b bzw. Mitnehmer 4a auf den Transmitter 2 übertragen werden. In der ersten Synchronposition wird die Verdrehung von Transmitter zu Synchronring 3a oder 3b durch die Mittnehmer 4b, die in entsprechend ausgelegten Ausbrüchen 5b begrenzt

Wie in Figur 3a zu erkennen, kommt es in der Ausführung nach dem StdT zu einem linienförmigen Kontakt zwischen der Sperrfläche 6 und der Anschlagfläche 10, der zur Folge hat, dass an der Kontaktfläche ein erhöhter Verschleiß eintritt, der zu Störungen im Schaltablauf führt.

Die Sperrfläche 6 und die Anschlagfläche 10 sind in der Leerlaufposition parallel zueinander ausgerichtete Flächen, die bei der Verdrehung zueinander nicht mehr parallel und vollflächig aufeinander treffen.

Entsprechend Figur 3b treffen die Sperrfläche 6 und die Anschlagfläche 10 in der ersten Synchronposition parallel aufeinander, der Winkelversatz der Flächen 6, 10 zueinander, der durch das Verdrehen entsteht, wird korrigiert, indem die Sperrfläche 6 um den Winkel α zur Fläche 13 der Ausnehmung 5a gekippt wurde, so dass es in der ersten Synchronposition von Synchronring 3a oder 3b und Transmitter 2 zu einem flächigen Kontakt kommt.

Der Winkelversatz bzw. der Winkel α kann für unterschiedliche Positionen während der Synchronisation ausgelegt sein, da sich die Synchronring 3a oder 3b und Transmitter 2 während der Synchronisation zueinander verdrehen und axial verschieben, kann nur in einer Position die Parallelität der Flächen 6, 10 erreicht werden. Vorzugsweise erfolgt die Auslegung auf die maximal mögliche Verdrehung der ersten Synchronposition, die mittels der Mitnehmer 4b in den Ausnehmungen 5b begrenzt wird. Bei dieser Verdrehung treten die größten Kräfte auf.

Aufgrund der schrägen Ausrichtung von Anschlagfläche 10 und Sperrfläche 6 wird eine Kraftkomponente erzeugt, die eine Verschiebung des Transmitters 2 relativ zum Mitnehmer 3a, b, c, d solange verhindert bis die Drehzahldifferenz gering genug ist. Umso geringer die Drehzahldifferenz umso geringer sind auch die Reibkräfte des Synchronrings 3a oder 3b, so dass die Schiebekraft auf den Transmitter ausreicht die Anschlagfläche 10 und Sperrfläche 6 gegeneinander zu verschieben, was wiederum eine relative Verdrehung von Synchronring 3a oder 3b und Transmitter 2 bewirkt.

Alternativ kann auch die Anschlagfläche 10 im Winkel angepasst werden. Eine Nitrierschicht mit einer Dicke zwischen 5µm und 15µm auf den Flächen 6, 10, 12 und/oder 14 verbessert die Verschließeigenschaften zusätzlich.

### Bezugszeichenliste

- 1: Schaltbaugruppe
- 2: Transmitter
- 3a, b: Synchronring
- 4a, b, c, d: Mitnehmer
- 5a, b: Ausnehmung
- 6: Sperrfläche
- 7a, b: Sperrring
- 8: Sperrverzahnung
- 9: Reibfläche
- 10: Anschlagfläche
- 11a ,b: Kontaktfläche
- 12: Stoppfläche
- 13: Fläche
- 14: Indexfläche
- 15: Antriebswelle
- 16: Abtriebswelle

## Patentansprüche

1. Schaltbaugruppe (1) für ein Getriebe zur Koppelung einer Antriebswelle (15), die einer Antriebsbaugruppe zugeordnet ist, mit einer Abtriebswelle (16), die einer Abtriebsbaugruppe zugeordnet ist, umfassend zwei Synchronringe (3a, b) und einen dazwischen angeordneten Transmitter (2), wobei die Synchronringe (3a, b) unterschiedlich ausgeführte korrespondierende Mitnehmer (4a, b, c, d) aufweisen, die paarweise in Ausnehmungen (5a, b, c) des Transmitters (2) eingreifen, wobei der Transmitter (2) in mehrere Funktionsstellungen gegenüber den Synchronringen (3a, b) bewegbar ist, wobei eine Funktionsstellungen eine Synchronposition ist, bei der korrespondierende erste Mitnehmer (4a) vorgesehen sind, die in eine erste Ausnehmung (5a) eingreifen, wobei die ersten Mitnehmer (4a) eine Anschlagfläche (10) aufweisen die mit einer Sperrfläche (6) am Transmitter (2) in Kontakt bringbar ist, **dadurch gekennzeichnet dass** die Anschlagfläche (10) am Mitnehmer (4a) und die Sperrfläche (6) am Transmitter (2) derart zueinander ausgerichtet sind, dass diese nur in einer Synchronposition parallel zueinander angeordnet sind.

2. Schaltbaugruppe (1) nach Anspruch 1,
**dadurch gekennzeichnet,**
**dass** die Anschlagflächen (10) und die Sperrflächen (6) parallel zueinander angeordnet sind, wenn die Verdrehung einen Maximalwert aufweist, bei dem zweite Mitnehmer (3b) mit einer Indexfläche (14) an Stoppflächen (12) am Transmitter (2) anschlagen.

3. Schaltbaugruppe (1) nach Anspruch 1,
**dadurch gekennzeichnet,**
**dass** die Anschlagflächen (10) an den ersten Mitnehmern (3a) in Umfangsrichtung gesehen den Rändern der ersten Ausnehmungen (5a) schräg ausgerichtet gegenüberliegen.

4. Schaltbaugruppe (1) nach Anspruch 3,
**dadurch gekennzeichnet,**
**dass** die Anschlagflächen (10) einem Winkel β zwischen 50° und 65° gegenüber der Axialrichtung aufweisen.

5. Schaltbaugruppe (1) nach Anspruch 1,
**dadurch gekennzeichnet,**
**dass** die zweite Ausnehmung (5b) am Transmitter (2) durch Stoppflächen (12) begrenzt ist, die parallel zur Axialrichtung ausgerichtet sind und die mit Indexflächen (14) an zweiten Mittnehmern (4b) in Kontakt bringbar sind.

6. Schaltbaugruppe (1) nach Anspruch 1,
**dadurch gekennzeichnet,**
**dass** die Stoppfläche(12), die Indexfläche (14), die Anschlagfläche (10) und/oder die Sperrflächen (6) nitriert sind.

7. Schaltbaugruppe (1) nach Anspruch 6,
**dadurch gekennzeichnet,**
**dass** die Nitrierschicht auf den Sperrflächen (6) eine Dicke zwischen 5µm und 15µm aufweist.

## Claims

1. Shifting assembly (1) for a transmission for coupling a drive shaft (15), which is assigned to a drive assembly, with an output shaft (16) which is assigned to an output assembly, comprising two synchronizer rings (3a, b) and a transmitter (2) arranged in between, wherein the synchronizer rings (3a, b) have differently designed corresponding drivers (4a, b, c, d) which engage in pairs into recesses (5a, b, c) of the transmitter (2), wherein the transmitter (2) is movable into a plurality of functional positions relative to the synchronizer rings (3a, b),
wherein
one of the functional positions is a synchronizing position, in which corresponding first drivers (4a) are provided which engage into a first recess (5a), wherein the first drivers (4a) have a stop surface (10) which can be brought into contact with a locking surface (6) on the transmitter (2), **characterized in that** the stop surface (10) on the driver (4a) and the locking surface (6) on the transmitter (2) are oriented with respect to each other in such a way that they are arranged parallel to each other only in a synchronizing position.

2. Shifting assembly (1) according to Claim 1, **characterized**
**in that** the stop surfaces (10) and the locking surfaces (6) are arranged parallel to each other when the rotation has a maximum value, in the case of which second drivers (3b) come into contact by way of an index surface (14) with stop surfaces (12) on the transmitter (2).

3. Shifting assembly (1) according to Claim 1, **characterized**
**in that** the stop surfaces (10) on the first drivers (3a), as viewed in the circumferential direction, lie opposite the edges of the first recesses (5a) in an obliquely oriented manner.

4. Shifting assembly (1) according to Claim 3, **characterized**
**in that** the stop surfaces (10) have an angle β between 50° and 65° in relation to the axial direction.

5. Shifting assembly (1) according to Claim 1, **characterized**
**in that** the second recess (5b) on the transmitter (2) is bounded by stop surfaces (12) which are oriented parallel to the axial direction and which can be brought into contact with index surfaces (14) on second drivers (4b).

6. Shifting assembly (1) according to Claim 1, **characterized**
**in that** the stop surface (12), the index surface (14), the stop surface (10) and/or the locking surfaces (6) are/is nitrided.

7. Shifting assembly (1) according to Claim 6, **characterized**
**in that** the nitriding layer on the locking surfaces (6) has a thickness between 5 µm and 15 µm.

## Revendications

1. Ensemble de changement de vitesse (1) pour une boîte de vitesses destiné à coupler un arbre d'entraînement (15), qui est associé à un ensemble d'entraînement, à un arbre de sortie (16), qui est associé à un ensemble de sortie, comprenant deux bagues de synchronisation (3a, b) et un émetteur (2) disposé entre celles-ci, les bagues de synchronisation (3a, b) comportant des entraîneurs (4a, b, c, d) correspondants réalisés différemment, qui viennent en prise par paires avec des évidements (5a, b, c) de l'émetteur (2), l'émetteur (2) pouvant être déplacé dans plusieurs positions fonctionnelles par rapport aux bagues de synchronisation (3a, b),
une position fonctionnelle étant une position synchrone, dans laquelle des premiers entraîneurs (4a) correspondants sont prévus, qui viennent en prise avec un premier évidement (5a), les premiers entraîneurs (4a) comportant une surface de butée (10), qui peut être amenée en contact avec une surface de blocage (6) sur l'émetteur (2), **caractérisé en ce que** la surface de butée (10) sur l'entraîneur (4a) et la surface de blocage (6) sur l'émetteur (2) sont orientées l'une par rapport à l'autre de telle manière que celles-ci sont disposées parallèlement l'une par rapport à l'autre dans une position de synchronisation.

2. Ensemble de changement de vitesse (1) selon la revendication 1,
**caractérisé en ce**
**que** les surfaces de butée (10) et les surfaces de blocage (6) sont disposées parallèlement les unes par rapport aux autres lorsque la rotation présente une valeur maximale, à laquelle des deuxièmes entraîneurs (3b) avec une surface d'indice (14) viennent buter contre des surfaces d'arrêt (12) sur l'émetteur (2).

3. Ensemble de changement de vitesse (1) selon la revendication 1,
**caractérisé en ce**
**que** les surfaces de butée (10) sur les premiers entraîneurs (3a) font face, vues dans la direction périphérique, aux bords des premiers évidements (5a) avec une orientation oblique.

4. Ensemble de changement de vitesse (1) selon la revendication 3,
**caractérisé en ce**
**que** les surfaces de butée (10) présentent un angle β entre 50° et 65° par rapport à la direction axiale.

5. Ensemble de changement de vitesse (1) selon la revendication 1,
**caractérisé en ce**
**que** le deuxième évidement (5b) est délimité sur l'émetteur (2) par des surfaces d'arrêt (12), qui sont orientées parallèlement à la direction axiale et qui peuvent être amenées en contact avec des surfaces d'indice (14) sur des deuxièmes entraîneurs (4b).

6. Ensemble de changement de vitesse (1) selon la revendication 1,
**caractérisé en ce**
**que** la surface d'arrêt (12), la surface d'indice (14), la surface de butée (10) et/ou les surfaces de blocage (6) sont nitrurées.

7. Ensemble de changement de vitesse (1) selon la revendication 6,
**caractérisé en ce**
**que** la couche de nitruration sur les surfaces de blocage (6) présente une épaisseur entre 5 µm et 15 µm.
